# EUROPEAN PATENT SPECIFICATION

(11) **EP 1 718 848 B1**
(45) Date of publication and mention of the grant of the patent: **30.04.2008**
(21) Application number: 04798675.7
(22) Date of filing: 25.11.2004
(51) Int. Cl.: F01N 1/16, F01N 3/00

(54) **SILENCER FOR EXHAUST SYSTEMS**
SCHALLDÄMPFER FÜR ABGASSYSTEME
SILENCIEUX POUR LES SYSTEMES D'ECHAPPEMENT

(30) Priority: 25.11.2003 GB 0327401
(43) Date of publication of application: 08.11.2006
(73) Proprietor: Emmett Limited, The Garrison Shoeburyness Essex SS3 9GE (GB)
(72) Inventor: EMMETT, Malcom Douglas, Benfleet, Essex SS7 5XA (GB)
(74) Representative: Garner, Jonathan Charles Stapleton
(86) International application number: PCT/GB2004/004976
(87) International publication number: WO 2006/056727

(56) References cited:
- EP-A- 0 710 767
- DE-A1- 4 323 644
- DE-B- 2 110 000
- JP-A- 60 019 907
- US-A- 3 718 208
- US-A- 4 901 528
- US-A- 5 279 117
- US-A- 5 747 753
- PATENT ABSTRACTS OF JAPAN vol. 009, no. 139 (M-387), 14 June 1985 (1985-06-14) & JP 60 019907 A (TOYOTA JIDOSHA KK), 1 February 1985 (1985-02-01)

## Description

The present invention relates to silencers for exhaust systems.

Modem vehicles are often provided with silencers connected to their exhaust systems in order to reduce noise pollution into the surrounding environment. When an engine of a vehicle is running, hot gases pass through the exhaust system. These gases have a tendency to condense on the internal surfaces of the exhaust system resulting in fluids, particularly water, collecting in the exhaust system and running into the silencer.

Collection of water is undesirable as it tends to cause the silencer unit to rust, greatly reducing the lifetime of the silencer unit.

One solution to this problem is to provide a hole in the silencer through which fluid may escape. However, puncturing the silencer unit casing reduces the effectiveness of the silencer and can cause pollution problems.

EP 0710767 discloses an exhaust system with a muffler connected at its inlet side to the exhaust gas inlet tube. The muffler comprises first and second exhaust gas flowing passages. First and second exhaust gas outlet tubes are respectively connected to the first and second exhaust gas flowing passages and extend from the muffler independently. A flow controller is arranged which varies the flow passage area of the second exhaust gas outlet tube in accordance with the pressure of the exhaust gas discharged from the engine.

DE P 2110000.5-13 discloses an exhaust system including a muffler. An outlet can be opened in the exhaust silencer by control means.

It is an object of the present invention to alleviate problems associated with previous silencers.

According to a first aspect of the present invention there is provided a silencer for an exhaust system comprising a fluid outlet and control means for opening and closing the fluid outlet wherein the control means comprises temperature dependent control means arranged to open and close the fluid outlet depending on the temperature of the silencer. In this way, the fluid outlet may be opened and closed in dependence on activity of the exhaust system.

By opening and closing the fluid outlet, the build up of fluids in the silencer may be controlled.

In some embodiments of the present invention, the silencer is arranged such that the fluid outlet is closed by the control means when the exhaust system is in use and the fluid outlet is opened by the control means when the exhaust system is idle.

Such embodiments allow fluids to drain from the silencer when the exhaust system is idle, preventing build up of fluids in the silencer, but close the fluid outlet when the exhaust system is in use, allowing the performance of the silencer to be improved.

In other embodiments of the present invention, the silencer is arranged such that the fluid outlet is opened by the control means when the exhaust system is in use and the fluid outlet is closed by the control means when the exhaust system is idle.

Such embodiments allow fluids to drain from the silencer when the exhaust system is in use and may prevent the build up of oily deposits beneath the exhaust system when the system is idle.

The fluid outlet may comprise an aperture formed in the casing of the silencer. The aperture may act as a fluid outlet directly or may serve to house an outlet portion for conducting fluid from one side of the silencer casing to the other. In preferred embodiments, the outlet portion comprises a self tapping plug. A self tapping plug provides a convenient way of mounting an outlet portion in the silencer casing. The self tapping plug may form a drainage aperture.

When the exhaust system is in use, hot fumes pass through the silencer, heating the silencer. However, when the system is idle, the silencer is no longer heated by fumes and the silencer cools.

The temperature dependent control means may comprise a bi-metallic strip. The control means may comprise a plug mounted on the bi-metallic strip for closing the fluid outlet.

The control means may be provided adjacent a surface of the casing of the silencer. In some embodiments the control means is provided adjacent an internal surface of the silencer casing. In such embodiments the control means is conveniently protected by the silencer casing.

In other embodiments the control means is provided adjacent an external surface of the silencer casing. This arrangement is particularly convenient where the control means is retro-fitted onto an existing silencer.

Where the control means comprises a bi-metallic strip, the bi-metallic strip may be held at one end such that a free end of the bi-metallic strip is movable by varying the temperature of the bi-metallic strip. In such embodiments the bi-metallic strip may act like a tongue, moving up and down to open and close the fluid outlet. A plug for closing the fluid outlet may be provided at the free end of the bi-metallic strip.

Where the bi-metallic strip acts in the tongue-like manner described above, the control means may be arranged such that when the bi-metallic strip is at a first temperature the bi-metallic lies substantially flat causing the fluid outlet to be closed and when the bi-metallic strip is at a second temperature the bi-metallic strip bends causing the fluid outlet to be open. The first temperature may be higher than the second temperature. Alternatively the second temperature may be higher than the first temperature.

In other embodiments, in which the bi-metallic strip acts in a tongue-like manner, the control means may be arranged such that at a first temperature the bi-metallic strip is arched such that a portion of the control means closes the fluid outlet and at a second temperature the bi-metallic strip has deformed causing the fluid outlet to be opened. The first temperature may be higher than the second temperature. Alternatively the second temperature may be higher than the first temperature. In some silencers the use of an arched bi-metallic strip reduces the risk that material, which may accumulate around the bi-metallic strip inhibits closing of the fluid outlet. The use of an arched bi-metallic strip also tends to increase the rigidity of the bi-metallic strip.

The control means may comprise a second bi-metallic strip. The use of two bi-metallic strips allows construction of a harder wearing and/or more sensitive control means.

The first and second bi-metallic strips may be arranged to co-operate to open and close the fluid outlet in dependence on the surrounding temperature. The first bi-metallic strip may be held at one end such that another free end of the bi-metallic strip is movable by varying the surrounding temperature. The second bi-metallic strip may be held at one end and may extend to contact the first bi-metallic strip. At at least one temperature the second bi-metallic strip may be tensioned against the first bi-metallic strip. The second bi-metallic strip may be arranged so as to be tensioned against the first bi-metallic strip to assist closing of the fluid outlet at a first temperature. The first and second bi-metallic strips may be arranged such that at a second temperature the first bi-metallic strip is caused to open the fluid outlet. The second bi-metallic strip may be attached to the first bi-metallic strip at least one point, for example, by spot welding.

In other embodiments, the bi-metallic strip may be held in at least two locations. The bi-metallic strip may be held so that it can arch between the locations. In such embodiments, a plug for closing the fluid outlet may be provided on the bi-metallic strip between the two locations at which the strip is held. The control means may be arranged such that when the bi-metallic strip is at a first temperature, the bi-metallic strip is substantially flat causing the fluid outlet to be closed and when the bi-metallic strip is at a second temperature the bi-metallic strip is arched causing the fluid outlet to be opened. The first temperature may be higher than the second temperature. Alternatively the second temperature may be higher than the first temperature.

The silencer may comprise a cover to protect the control means. Provision of a cover is particularly preferable when the control means is provided adjacent an external surface of the silencer casing as such a casing may serve to protect the control means from the elements. The casing may comprise a bi-metallic cover strip. In preferred silencers a bi-metallic cover strip forms an arch over the control means. The cover strip may be arranged such that it adopts a flatter configuration when the fluid outlet is closed and adopts a more arched configuration when the fluid outlet is open.

According to a second aspect of the present invention there is provided a method of adapting a silencer for an exhaust system, comprising the steps of:
providing the silencer with a fluid outlet; and
providing temperature dependent silencer control means arranged to open and close the fluid outlet in dependence on the temperature of the silencer.

The method may further comprise the step of providing one or more of the optional features described with respect to the first aspect of the present invention.

The method may be a method of adapting a silencer for a vehicle exhaust system.

Silencers embodying the present invention will now be described, by way of example only, with reference to the accompanying figures in which:
Figure 1 shows a silencer fitted to an exhaust system, when the exhaust system is in use;
Figure 2 shows the silencer shown in Figure 1 when the exhaust system is idle;
Figure 3 shows a second silencer fitted to an exhaust system, when the exhaust system is in use;
Figure 4 shows the second silencer when the exhaust system is idle;
Figure 5 shows a third silencer fitted to an exhaust system, when the exhaust system is idle;
Figure 6 shows the third silencer when the exhaust system is in use;
Figure 7 shows a fourth silencer fitted to an exhaust system, when the exhaust system is in use;
Figure 8 shows the fourth silencer when the exhaust system is idle;
Figure 9 shows a fifth silencer fitted to an exhaust system, when the exhaust system is in use;
Figure 10 shows the fifth silencer when the exhaust system is idle;
Figure 11 shows a sixth silencer fitted to an exhaust system, when the exhaust system is in use;
Figure 12 shows the sixth silencer when the exhaust system is idle;
Figure 13 shows a seventh silencer fitted to an exhaust system, when the exhaust system is idle;
Figure 14 shows the seventh silencer fitted to an exhaust system when the exhaust system is in use;
Figure 15 shows an eighth silencer fitted to an exhaust system, when the exhaust system is idle;
Figure 16 shows a section of bi-metallic strip with a fixing hole.

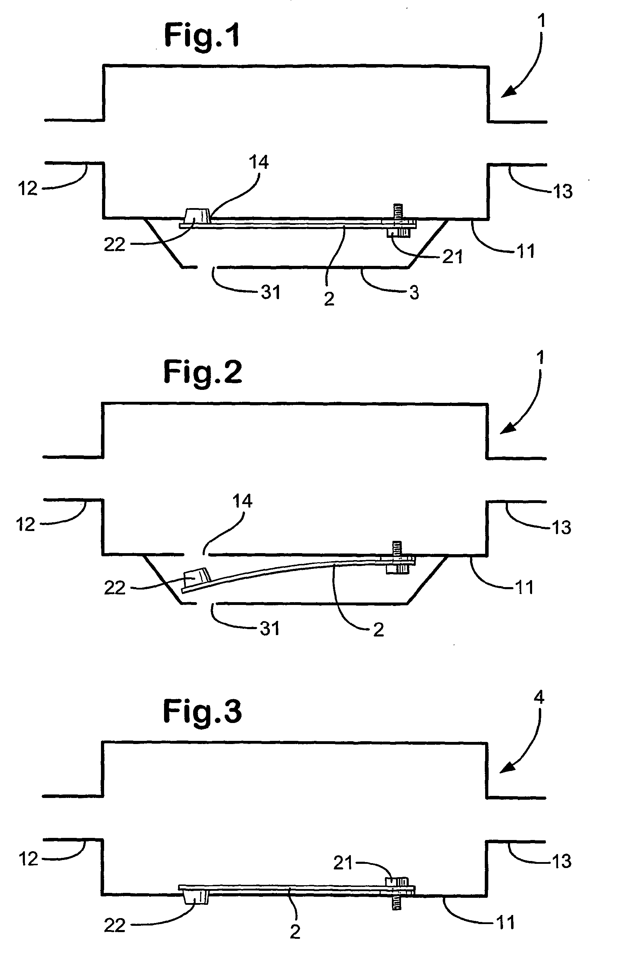

Figure 1 shows a silencer 1 comprising silencer casing 11, an exhaust inlet 12 and an exhaust outlet 13. The exhaust inlet 12 and exhaust outlet 13 are connected to an exhaust system (not shown). Figure 1 shows the silencer 1 fitted to an exhaust system when the exhaust system is in use. In this configuration, a lower portion of the silencer casing 11 has an aperture 14. Typically the aperture has a diameter of approximately 0.6 cm (1/4 inch).

On the external surface of the silencer casing 11 is provided control means in the form of a substantially straight bi-metallic strip 2 and a rivet stopper 22. One end of the bi-metallic strip 2 is attached by a screw 21 to the external surface of the silencer casing 11. The other end of the bi-metallic strip is a free end. At the free end of the bi-metallic strip 2 is provided the rivet stopper 22. The bi-metallic strip 2 is arranged on the external surface of the silencer casing 11 so that the rivet stopper 22 is aligned with the aperture 14 in the silencer casing 11.The free end of the bi-metallic strip 2 may move up and down as the temperature of the silencer varies. In this way the bi-metallic strip 2 may be considered to act like a tongue for opening and closing the aperture 14.

An external cover 3 is provided surrounding the bi-metallic strip 2 and attached at its periphery to the external surface of the silencer casing 11. The external cover 3 has a drainage hole 31 on a lower surface of the external cover 3 near to the aperture 14.

When the exhaust system is in use hot fumes pass through the exhaust system and through the silencer 1. As the fumes pass through the exhaust system and the silencer 1 there is a tendency for fluids to condense on the internal surfaces of the exhaust system and the silencer 1. These fluids can accumulate in the silencer 1.

Figure 2 shows the silencer 1 when the exhaust system is idle and the silencer 1 is cool. At this temperature, the bi-metallic strip 2 is curved and bends away from the external surface of the silencer casing 11. The rivet stopper 22 provided at one end of the bi-metallic strip 2 is held a short distance from the aperture 14. Any fluid which may be present in the silencer 1 may drain through the aperture 14, past the bi-metallic strip 2 and through the drainage hole 31 in the external cover 3.

When the exhaust system is in use hot fumes pass through the silencer 1 heating the casing of the silencer 11 and the bi-metallic strip 2. As the bi-metallic strip 2 is heated, the bi-metallic strip straightens out moving the rivet stopper 22 into the aperture 14. When the silencer 1 reaches its normal operating temperature the rivet stopper 22 has moved close to the aperture 14. In this configuration, fluids may accumulate in the silencer 1, though this tendency is reduced by the increased temperature of the silencer casing 11. The sealing of the aperture 14 by the rivet stopper 22 allows the silencer 1 to run quietly.

The silencer 1 may be formed from a conventional silencer unit. In order to adapt a conventional silencer unit having a silencer casing 11, an aperture 14 is drilled in the silencer casing 11. A second, guide, hole may be drilled in the silencer casing 11 at a desired location to receive a screw 21. To complete the adaption of the conventional silencer, a bi-metallic strip 2 having a rivet stopper 22 disposed at one end is attached to the silencer casing 11 by a screw 21 passing through the other end of the bi-metallic strip 2. The screw 21 is screwed into the guide hole, the position of the guide hole having been selected such that when a bi-metallic strip 2 is fitted the rivet stopper 22 will align with the aperture 14.

Optionally an external cover 3 may be provided to protect the bi-metallic strip 2.

Figure 3 shows a second silencer, which is the same as that shown in Figures 1 and 2 except that the bi-metallic strip 2 is attached by the screw 21 to the internal surface rather than the external surface of the silencer casing 11. The same reference numerals are used throughout the Figures to indicate corresponding parts. Because the bi-metallic strip is now provided on the inside of the silencer casing 11, an external cover 3 is no longer provided as the bi-metallic strip is adequately protected by the silencer casing 11.

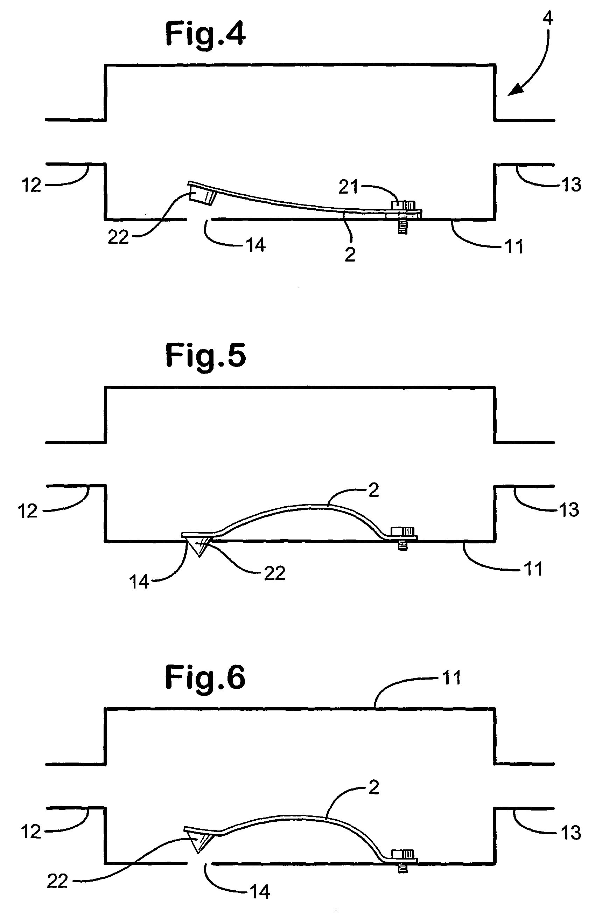

The operation of the second silencer 4 is similar to that of the silencer 1. Figure 4 shows the second silencer when the exhaust system is idle and the silencer 4 is cool. The bi-metallic strip is cool and curves away from the internal surface of the silencer casing 11 and the rivet stopper 22 is displaced from the aperture 14. When the exhaust system is in use, as shown in Figure 3, the bi-metallic strip 2 is heated by fumes from the exhaust system. When heated the bi-metallic strip straightens moving the rivet stopper 22 to cover the aperture 14.

Any fluid accumulated in the second silencer 4 may escape via the uncovered aperture 14 when the exhaust system is idle and the silencer is cool. However, when the exhaust system is in operation, the aperture 14 is covered by the rivet stopper 22, enhancing the quietening effect of the silencer.

Figures 5 and 6 show a third silencer 1 attached to an exhaust system. The third silencer is similar to the second silencer in that it comprises control means in the form of a bi-metallic strip 2 and a rivet stopper 22. As before the bi-metallic strip 2 is attached to an internal surface of the silencer casing 11. However, the third silencer differs from the second silencer in two respects. In the third silencer, the bi-metallic strip 2 is arched rather than being substantially straight. This change is a matter of construction of the bi-metallic strip 2 and tends to prevent material which may collect between the bi-metallic strip 2 and the internal surface of the casing 11 from preventing the bi-metallic strip 2 closing the aperture 14 properly. As the temperature of the bi-metallic strip is varied the strip deforms causing the arched portion to pivot away from the screw.

Further, operation of the third silencer differs from that described with respect to the first and second silencers. When the exhaust system is in use, the arched bi-metallic strip 2 is warmed by exhaust fumes. This causes the arched portion to raise adopting the configuration shown in Figure 6. In this configuration the rivet stopper 22 is held away from the aperture 14 and any fluids which condense in the silencer may escape through the aperture 14. On the other hand, when the exhaust system is idle, the bi-metallic strip cools and the arched portion of the bi-metallic strip 2 lowers, adopting the configuration shown in Figure 5. In this configuration, the rivet stopper 22 is held over the aperture 14 and fluids may not escape. The retention of fluids within the silencer 1 tends to reduce the build up of oily deposits below the silencer, which may be of concern if the silencer is mounted on a vehicle.

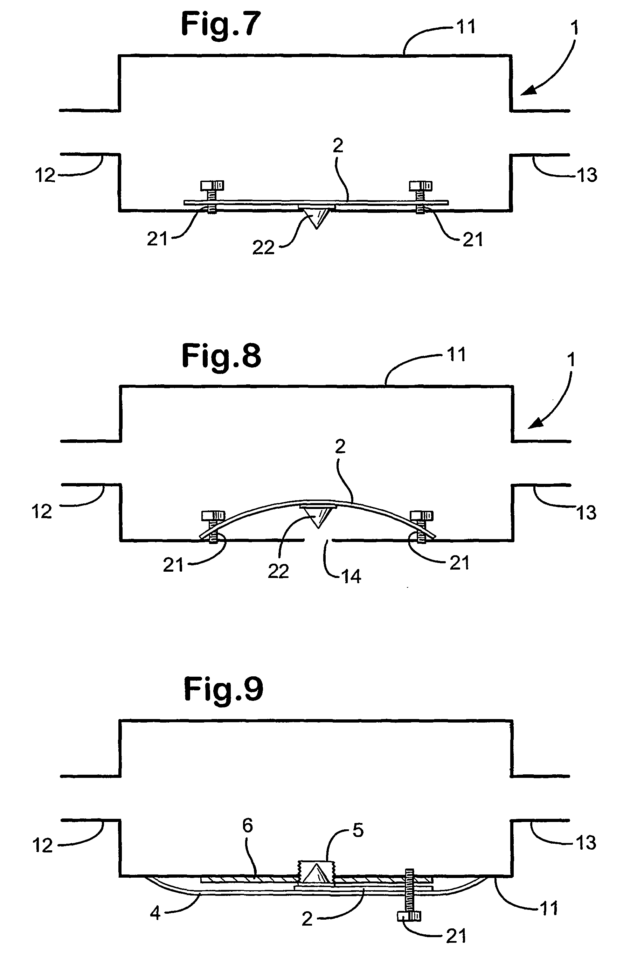

Figures 7 and 8 show a fourth silencer 1 attached to vehicle exhaust system.

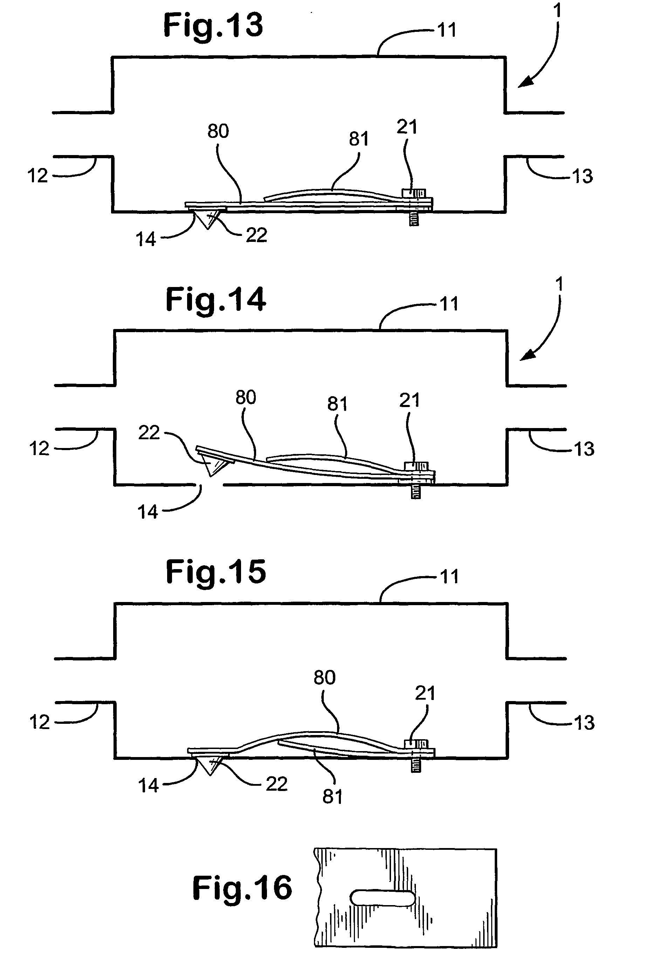

In contrast to the tongue-like arrangement of the bi-metallic strip 2 in the previously described embodiments the bi-metallic strip of the fourth silencer is held between two screws 21. One screw 21 is provided either side of an aperture 14 in the casing 11 of the fourth silencer 1. Either end of the substantially straight bi-metallic strip 2 is attached to a respective screw 21 via an elongate fixing hole provided in the bi-metallic strip 2. Figure 16 shows a section of bi-metallic strip provided with such fixing holes. A rivet stopper 22 is provided substantially at the mid-point of the bi-metallic strip 2 and aligned with the aperture 14. When the exhaust system is in use the bi-metallic strip 2 is warmed by exhaust fumes and tends to straighten to lie flat against the silencer casing 11. This configuration is shown in Figure 7 and causes the rivet stopper 22 to close the aperture 14 preventing fluid from escaping from within the silencer. When the exhaust system is idle the bi-metallic strip 2 tends to cool causing the bi-metallic strip to arch between the two screws 21 and moving the rivet stopper 22 away from the aperture 14. This configuration is shown in Figure 8. In this figure the aperture 14 is open and fluids may escape from the silencer 1.

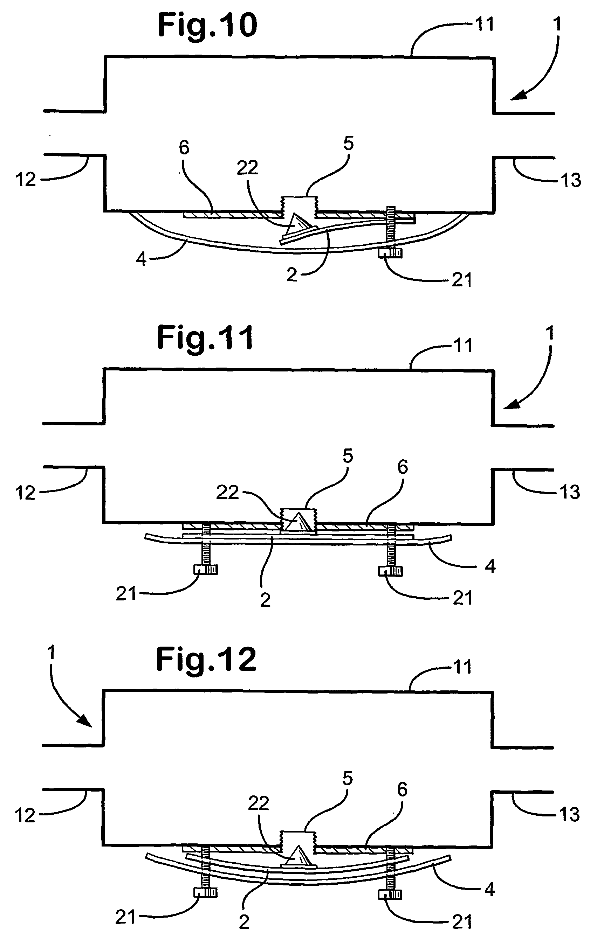

Figures 9 and 10 show a fifth silencer fitted to an exhaust system. The silencer casing 11 shown in these Figures is of the type previously described, however, the thickness of the silencer casing 11 adjacent the control means is shown in these Figures for the purposes of clearer illustration. Adjacent the silencer casing 11 is provided a fixing plate 6. In the embodiments shown in Figures 9 and 10, the aperture 14 described with reference to the previous embodiments, has been replaced by a self-tapping fixing plug 5. This fixing plug 5 is provided with a drainage hole (not shown) and allows fluid to pass from inside the silencer 1 to the outside. As may be seen in the Figures, the self-tapping fixing plug 5 forms an aperture in both the fixing plate 6 and the silencer casing 11.

A fixing plug 5 may be used in place of the aperture 14 in any of the described embodiments. In order to fit a fixing plug, a fixing plate 16 is provided adjacent the silencer casing and the self-tapping fixing plug 5 is inserted. The provision of the fixing plate 6 ensures that there is sufficient thickness of metal or other material for the fixing plug 5 to secure itself to. The use of the self-tapping fixing plug 5 and fixing plate 6 is particularly preferable when retro-fitting existing silencer units.

In the embodiment shown in Figures 9 and 10, the control means is provided on an external surface of the silencer casing 11, which would be typical for a retro-fitting operation. A bi-metallic strip 2 is attached to the external surface of the fixing plate 6 by a screw 21 and a rivet stopper 22 is provided at a free end of the bi-metallic strip 2 to form a tongue-like arrangement of the type previously described. The rivet stopper 22 is aligned with the fixing plug 5. Also provided is a bi-metallic strip cover 4. This bi-metallic strip cover 4 is made of a non-corrosive material and is arranged to cover the control means and to protect it from the elements.

In use, the bi-metallic strip 2 and the rivet stopper 22 act in a tongue-like fashion to open the fixing plug 5 when the exhaust system is in use and to close the fixing plug 5 when the exhaust system is idle. The bi-metallic strip cover 4 serves to cover the control means. When the exhaust system is in use, the silencer is warmed and the bi-metallic strip 2 and rivet stopper 22 tend to cover the fixing plug 5. In this situation the bi-metallic strip cover 4 tends also to be warmed and to straighten, lying nearly flat across the top of the control means. The silencer 1 therefore tends to adopt the configuration shown in Figure 9. When the exhaust system is idle the bi-metallic strip 2 tends to cool holding the rivet stopper 22 away from the fixing plug 5. At the same time the bi-metallic strip cover 4 also tends to cool, arching and providing room for the bi-metallic strip 2 which now curves away from the silencer casing 11 and fixing plate 6. Thus the bi-metallic strip cover 4 closely follows the changing size of the control means and provides protection against damage.

Figures 11 and 12 show a sixth silencer fitted to an exhaust system. The sixth silencer is very similar to the fifth silencer except that the tongue-like configuration of the bi-metallic strip 2 in the fifth silencer has been replaced by a bi-metallic strip 2 provided between two screws 21 which acts in a similar manner to that described in respect of the fourth silencer.

Adjacent an external surface of the silencer casing 11 of the sixth silencer is provided a fixing plate 6. A self-tapping fixing plug 5 forms an aperture in the silencer casing 11 and fixing plate 6 and serves to provide a fluid outlet. Outside the fixing plate 6 and attached between two screws 21 is provided a bi-metallic strip 2. Attached to the bi-metallic strip 2, roughly at its mid-point, is a rivet stopper 22 for covering and uncovering the fixing plug 5. Covering the control means is a bi-metallic strip cover 4.

When the exhaust system is in use the bi-metallic strip 2 tends to straighten lying adjacent the fixing plate 6 and causing the rivet stopper 22 to cover the fixing plug 5 preventing escape of fluid from the silencer 1. When the exhaust system is in use the silencer 1 tends to warm the bi-metallic strip cover 4 causing this to straighten and lie close to the bi-metallic strip 2.

When the exhaust system is idle both the bi-metallic strip 2 and the bi-metallic strip cover 4 tend to cool. The bi-metallic strip 2 tends to arch between the two screws 21 moving the rivet stopper 22 away from the self-tapping fixing plug 5 and allowing fluid to escape from within the silencer 1. At the same time the bi-metallic strip cover 4 tends to cool arching between the two screws 21 and allowing space for the arching bi-metallic strip 2. The bi-metallic strip cover 4 therefore provides close protection for the bi-metallic strip 2 whilst allowing space for the bi-metallic strip 2 to arch.

Figures 13 and 14 show a seventh silencer fitted to an exhaust system. The seventh silencer is similar to the second silencer except that the single bi-metallic strip 2 in the second silencer has been replaced by a substantially straight primary bi-metallic strip 80 and an arched secondary bi-metallic strip 81 in the seventh silencer. Both the primary bi-metallic strip 80 and the secondary bi-metallic strip 81 are fixed to the silencer casing 11 by a screw 21. Attached to the primary bi-metallic strip 80 is a rivet stopper 22 aligned with an aperture 14 in the casing 11. The primary bi-metallic strip 80 is movable up and down in a tongue-like fashion to cause the rivet stopper 22 to cover and uncover the aperture 14 in dependence on the temperature of the silencer 1. The secondary bi-metallic strip 81 is provided arched over the top of the primary bi-metallic strip 80 and in contact therewith near the screw 21 and at a point part way along the length of the primary bi-metallic strip.

In this embodiment, the secondary bi-metallic strip 81 is arranged on top of the primary bi-metallic strip 80. When the control means is in the configuration shown in Figure 13 the secondary bi-metallic strip 81 is secured by the screw 21 such that it is tensioned against the primary bi-metallic strip 80. The tension in the secondary bi-metallic strip 80 tends to hold the primary bi-metallic strip 81 against the interior surface of the silencer casing 11 keeping the aperture 14 closed.

In use the silencer tends to warm up. As the secondary bi-metallic strip 80 warms, it deforms, easing the force it applies to the primary bi-metallic strip 81. The primary bi-metallic strip also warms and deforms causing the rivet stopper 22 to move away from the aperture 14.

This type of silencer arrangement is particularly advantageous if the silencer only experiences a small temperature change during normal operation. In such cases, in order to increase the sensitivity of the primary bi-metallic strop, to changes in temperature, the primary bi-metallic strip is made longer and thinner. This reduces the strength of the primary bi-metallic strip. Provision of the secondary bi-metallic strip in this situation tends to improve the strength of the bi-metallic strip arrangement.

The secondary bi-metallic strip 81 may be provided alongside the primary bi-metallic strip 80 and in contact therewith. In the embodiment shown, the secondary bi-metallic strip 81 is only attached to the primary bi-metallic strip 80 by the screw 21. The other end of the secondary bi-metallic strip 81, opposite the screw 21, is in contact with the primary bi-metallic strip 80 but is free to move relative thereto. In other embodiments the secondary bi-metallic strip 81 may be attached to the primary bi-metallic strip 80. For example, the secondary bi-metallic strip 81 may be spot welded to the primary bi-metallic strip 80.

In the seventh silencer the primary bi-metallic strip 80 is provided adjacent the silencer casing 11 on the interior of the silencer 1 and the secondary bi-metallic strip 81 is provided on top of the primary bi-metallic strip 80. In an alternative silencer, shown in Figure 15, a substantially straight secondary bi-metallic strip 81 is provided between the silencer casing 11 and an arched primary bi-metallic strip 80. In this case when the silencer is idle the secondary bi-metallic strip 81 is curved and tends to hold the primary bi-metallic strip 80 away from the interior surface of the silencer casing, keeping the aperture 14 open.

As the temperature of the silencer increases the secondary bi-metallic strip 81 tends to straighten allowing the primary bi-metallic strip 80 to move towards the interior surface of the silencer casing 11, closing the aperture 14.

Silencers have been described in which the aperture or fixing plug are opened and closed in dependence on the temperature of the silencer 1. In each of the embodiments described whether the aperture or fixing plug is covered or uncovered when the exhaust system is idle could be altered by modification of the design. Therefore, whilst the embodiments above describe particular modes of operation, it should be appreciated that modifying these embodiments to include or exclude optional features of the present invention is a straight-forward matter.

## Claims

1. A silencer (1) for an exhaust system comprising a fluid outlet (13) and control means (2, 22) for opening and closing the fluid outlet (13) wherein the control means (2, 22) comprises temperature dependent control means (2) arranged to open and close the fluid outlet (13) in dependence on the temperature of the silencer (1).

2. A silencer according to claim 1 arranged such that when the exhaust system is in use, the fluid outlet is opened by the control means and when the exhaust system is idle, the fluid outlet is closed by the control means.

3. A silencer according to claim 1 arranged such that when the exhaust system is in use, the fluid outlet is closed by the control means and when the exhaust system is idle, the fluid outlet is opened by the control means.

4. A silencer according to any preceding claim wherein the fluid outlet is an aperture formed in the casing of the silencer.

5. A silencer according to any preceding claim wherein the fluid outlet is a self-tapping plug.

6. A silencer according to any preceding claim wherein the temperature dependent control means comprises a bi-metallic strip.

7. A silencer according to claim 4 wherein the control means comprises a plug for closing the aperture.

8. A, silencer according to any preceding claim wherein the control means is provided adjacent an internal surface of the silencer.

9. A silencer according to any one of claims 1 to 7 wherein the control means is provided adjacent an external surface of the silencer.

10. A silencer according to any preceding claim when dependent on claim 6 wherein the bi-metallic strip is held at one end such that a free end of the bi-metallic strip is movable by varying the temperature of the bimetallic strip.

11. A silencer according to claim 10 wherein the bi-metallic strip is substantially straight.

12. A silencer according to claim 10 wherein the bi-metallic strip is arched.

13. A silencer according to any preceding claim further comprising a second bi-metallic strip.

14. A silencer according to claim 13 wherein the second bi-mstallic strip is attached to the first bi-metallic strip at least one point.

15. A silencer according to claim 13 or claim 14 wherein at at least one temperature the second bi-metallic strip is tensioned against the first bi-metallic strip.

16. A silencer according to claim 6 wherein the bi-metallic strip is held in at least two locations such that the bi-metallic strip may arch.

17. A silencer according to claim 16 wherein the control means is arranged such that when the bi-metallic strip is at a first temperature, the bx-zaetallic strip is substantially flat causing the fluid outlet to be closed and when the bi-metallic strip is at a second temperature the bi-metallic strip is arched causing the fluid outlet to be opened.

18. A silencer according to claim 17 wherein the first temperature is higher than the second temperature.

19. A silencer according to claim 17 wherein the second temperature is higher than the first temperature.

20. A silencer according to any preceding claim comprising a cover to protect the control means.

21. A silencer according to claim 20 wherein the cover comprises a bi-metallic cover strip.

22. A silencer according to claim 21 arranged such that the bi-metallic cover strip adopts a flatter configuration when the fluid outlet is closed and a more arched configuration when the fluid outlet is open.

23. A method of adapting a silencer for an exhaust system, comprising the steps of:
providing the silencer with a fluid outlet; and
providing temperature dependant silencer control means arranged to open and close the fluid outlet in dependence on the temperature of the silencer.

24. A method according to claim 23 further comprising the step of arranging the control means such that when the exhaust system is in use, the fluid outlet is opened by the control means and when the exhaust system is idle, the fluid outlet is closed by the control means.

25. A method according to claim 23 further comprising the step of arranging the control means such that when the exhaust system is in use, the fluid outlet is closed by the control means and when the exhaust system is idle, the fluid outlet is opened by the control means.

26. A method according to any one of claims 23 to 25 wherein the step of providing the silencer with a fluid outlet comprises the step of forming an aperture in the casing of the silencer.

27. A method according to any one of claims 23 to 25 wherein the step of providing the silencer with a fluid outlet comprises the step of inserting a self-tapping plug.

28. A method according to claims 23-27 wherein the temperature dependent control means comprises a bi-metallic strip.

29. A method according to claim 26 wherein the control means comprises a plug for closing the aperture.

30. A method according to any one of claims 23 to 29 comprising the step of providing the control means adjacent an internal surface of the silencer.

31. A method according to any one of claims 23 to 29 including the step of providing control means adjacent an external surface of the silencer.

32. A method according to any preceding claim when dependent on claim 28 wherein the bi-metallitc strip is held at one end such that a free end of the bi-metallic strip is movable by varying the temperature of the bi-metallic strip.

33. A method according to claim 32 wherein the step of providing a bi-metallic strip is the step of providing a substantially straight bi-metallic strip.

34. A method according to claim 32 wherein the step of providing a bi-metallie strip is the step of providing an arched bi-metallic strip.

35. A method according to any one of claims 23 to 34 further comprising the step of providing a second bi-metallic strip.

36. A method according to claim 35 comprising the step of attaching the second bi-metallic strip to the first bi-metallic strip at at least one point.

37. A method according to claim 35 or 36 comprising the step of tensioning the second bi-metallic strip against the first.

38. A method according to claim 28 wherein the bi-metallic strip is held in at least two locations such that the bi-metallic strip may arch.

39. A method according to claim 38 comprising the step of arranging the control means such that when the bi-metallic strip is at a first temperature, the bi-metallic strip is substantially flat causing the fluid outlet to be closed and when the bi-metallic strip is at a second temperature the bi-metallic strip is arched causing the fluid outlet to be opened.

40. A method according to claim 39 wherein the first temperature is higher than the second temperature.

41. A method according to claim 39 wherein the second temperature is higher than the first temperature.

42. A method according to any one of claims 23 to 41 comprising the step of providing a cover to protect the control means.

43. A method according to claim 42 wherein the step of providing a cover comprises the step of providing a bi-metallic cover strip.

44. A method according to claim 43 comprising the step of arranging the silencer such that the bi-metallic strip cover adopts a flatter configuration when the fluid outlet is closed and a more arched configuration when the fluid outlet is open.

## Patentansprüche

1. Schalldämpfer (1) für ein Abgassystem mit einem Fluidauslass (13) und einem Steuermittel (2, 22) zum Öffnen und Schließen des Fluidauslasses (13), wobei das Steuermittel (2, 22) ein temperaturabhängiges Steuermittel (2) umfasst, das zum Öffnen und Schließen des Fluidauslasses (13) in Abhängigkeit von der Temperatur des Schalldämpfers (1) angeordnet ist.

2. Schalldämpfer nach Anspruch 1, der so angeordnet ist, dass im Gebrauch des Abgassystems der Fluidauslass durch das Steuermittel geöffnet wird und im Leerlauf des Abgassystems der Fluidauslass durch das Steuermittel geschlossen wird.

3. Schalldämpfer nach Anspruch 1, der so angeordnet ist, dass im Gebrauch des Abgassystems der Fluidauslass durch das Steuermittel geschlossen wird und im Leerlauf des Abgassystems der Fluidauslass durch das Steuermittel geöffnet wird.

4. Schalldämpfer nach einem der vorhergehenden Ansprüche, wobei der Fluidauslass eine im Gehäuse des Schalldämpfers ausgebildete Öffnung ist.

5. Schalldämpfer nach einem der vorhergehenden Ansprüche, wobei der Fluidauslass ein selbstschneidender Stopfen ist.

6. Schalldämpfer nach einem der vorhergehenden Ansprüche, wobei das temperaturabhängige Steuermittel einen Bimetallstreifen umfasst.

7. Schalldämpfer nach Anspruch 4, wobei das Steuermittel einen Stopfen zum Verschließen der Öffnung umfasst.

8. Schalldämpfer nach einem der vorhergehenden Ansprüche, wobei das Steuermittel neben einer Innenfläche des Schalldämpfers vorgesehen ist.

9. Schalldämpfer nach einem der Ansprüche 1 bis 7, wobei das Steuermittel neben einer Außenfläche des Schalldämpfers vorgesehen ist.

10. Schalldämpfer nach einem der vorhergehenden Ansprüche, sofern von Anspruch 6 abhängig, wobei der Bimetallstreifen an einem Ende festgehalten wird, so dass ein freies Ende des Bimetallstreifens durch Ändern der Temperatur des Bimetallstreifens beweglich ist.

11. Schalldämpfer nach Anspruch 10, wobei der Bimetallstreifen im Wesentlichen gerade ist.

12. Schalldämpfer nach Anspruch 10, wobei der Bimetallstreifen gekrümmt ist.

13. Schalldämpfer nach einem der vorhergehenden Ansprüche, weiterhin mit einem zweiten Bimetallstreifen.

14. Schalldämpfer nach Anspruch 13, wobei der zweite Bimetallstreifen mindestens an einer Stelle am ersten Bimetallstreifen befestigt ist.

15. Schalldämpfer nach Anspruch 13 oder 14, wobei bei mindestens einer Temperatur der zweite Bimetallstreifen gegen den ersten Bimetallstreifen gespannt ist.

16. Schalldämpfer nach Anspruch 6, wobei der Bimetallstreifen an mindestens zwei Stellen so gehalten wird, dass sich der Bimetallstreifen krümmen kann.

17. Schalldämpfer nach Anspruch 16, wobei das Steuermittel so angeordnet ist, dass der Bimetallstreifen, wenn er sich auf einer ersten Temperatur befindet, im Wesentlichen flach ist, und ein Schließen des Fluidauslasses verursacht, und dass sich der Bimetallstreifen, wenn er sich auf einer zweiten Temperatur befindet, krümmt und ein Öffnen des Fluidauslasses verursacht.

18. Schalldämpfer nach Anspruch 17, wobei die erste Temperatur höher als die zweite Temperatur ist.

19. Schalldämpfer nach Anspruch 17, wobei die zweite Temperatur höher als die erste Temperatur ist.

20. Schalldämpfer nach einem der vorhergehenden Ansprüche, mit einer Abdeckung zum Schutz des Steuermittels.

21. Schalldämpfer nach Anspruch 20, wobei die Abdeckung einen Bimetallabdeckungsstreifen umfasst.

22. Schalldämpfer nach Anspruch 21, der so angeordnet ist, dass der Bimetallabdeckungsstreifen eine flachere Konfiguration einnimmt, wenn der Fluidauslass geschlossen ist, und eine gekrümmtere Konfiguration, wenn der Fluidauslass geöffnet ist.

23. Verfahren zum Ausführen eines Schalldämpfers für ein Abgassystem, das die folgenden Schritte umfasst:
Versehen des Schalldämpfers mit einem Fluidauslass und
Bereitstellen eines temperaturabhängigen Schalldämpfersteuermittels, das zum Öffnen und Schließen des Fluidauslasses in Abhängigkeit von der Temperatur des Schalldämpfers angeordnet ist.

24. Verfahren nach Anspruch 23, das weiterhin den Schritt des derartigen Anordnens des Steuermittels umfasst, dass der Fluidauslass im Gebrauch des Abgassystems durch das Steuermittel geöffnet und im Leerlauf des Abgassystems durch das Steuermittel geschlossen wird.

25. Verfahren nach Anspruch 23, das weiterhin den Schritt des derartigen Anordnens des Steuermittels umfasst, dass der Fluidauslass im Gebrauch des Abgassystems durch das Steuermittel geschlossen und im Leerlauf des Abgassystems durch das Steuermittel geöffnet wird.

26. Verfahren nach einem der Ansprüche 23 bis 25, wobei der Schritt des Versehens des Schalldämpfers mit einem Fluidauslass den Schritt des Bildens einer Öffnung in dem Gehäuse des Schalldämpfers umfasst.

27. Verfahren nach einem der Ansprüche 23 bis 25, wobei der Schritt des Versehens des Schalldämpfers mit einem Fluidauslass den Schritt des Einführens eines selbstschneidenden Stopfens umfasst.

28. Verfahren nach den Ansprüchen 23 bis 27, wobei das temperaturabhängige Steuermittel einen Bimetallstreifen umfasst.

29. Verfahren nach Anspruch 26, wobei das Steuermittel einen Stopfen zum Schließen der Öffnung umfasst.

30. Verfahren nach einem der Ansprüche 23 bis 29, das den Schritt des Bereitstellens des Steuermittels neben einer Innenfläche des Schalldämpfers umfasst.

31. Verfahren nach einem der Ansprüche 23 bis 29 mit dem Schritt des Bereitstellens des Steuermittels neben einer Außenfläche des Schalldämpfers.

32. Verfahren nach einem der vorhergehenden Ansprüche, sofern von Anspruch 28 abhängig, wobei der Bimetallstreifen an einem Ende festgehalten wird, so dass ein freies Ende des Bimetallstreifens durch Ändern der Temperatur des Bimetallstreifens beweglich ist.

33. Verfahren nach Anspruch 32, wobei der Schritt des Bereitstellens eines Bimetallstreifens der Schritt des Bereitstellens eines im Wesentlichen geraden Bimetallstreifens ist.

34. Verfahren nach Anspruch 32, wobei der Schritt des Bereitstellens eines Bimetallstreifens der Schritt des Bereitstellens eines gekrümmten Bimetallstreifens ist.

35. Verfahren nach einem der Ansprüche 23 bis 34, das weiterhin den Schritt des Bereitstellens eines zweiten Bimetallstreifens umfasst.

36. Verfahren nach Anspruch 35, das den Schritt des Befestigens des zweiten Bimetallstreifens am ersten Bimetallstreifen an mindestens einer Stelle umfasst.

37. Verfahren nach Anspruch 35 oder 36, das den Schritt des Spannens des zweiten Bimetallstreifens gegen den ersten umfasst.

38. Verfahren nach Anspruch 28, wobei der Bimetallstreifen an mindestens zwei Stellen so festgehalten wird, dass sich der Bimetallstreifen krümmen kann.

39. Verfahren nach Anspruch 38, das den Schritt des derartigen Anordnens des Steuermittels umfasst, dass der Bimetallstreifen, wenn er sich auf einer ersten Temperatur befindet, im Wesentlichen flach ist und ein Schließen des Fluidauslasses verursacht, und dass sich der Bimetallstreifen, wenn er sich auf einer zweiten Temperatur befindet, krümmt und ein Öffnen des Fluidauslasses verursacht.

40. Verfahren nach Anspruch 39, wobei die erste Temperatur höher als die zweite Temperatur ist.

41. Verfahren nach Anspruch 39, wobei die zweite Temperatur höher als die erste Temperatur ist.

42. Verfahren nach einem der Ansprüche 23 bis 41, das den Schritt des Bereitstellens einer Abdeckung zum Schutz des Steuermittels umfasst.

43. Verfahren nach Anspruch 42, wobei der Schritt des Bereitstellens einer Abdeckung den Schritt des Bereitstellens eines Bimetallstreifens umfasst.

44. Verfahren nach Anspruch 43, das den Schritt des derartigen Anordnens des Schalldämpfers umfasst, dass die Bimetallstreifenabdeckung eine flachere Konfiguration einnimmt, wenn der Fluidauslass geschlossen ist, und eine gekrümmtere Konfiguration, wenn der Fluidauslass geöffnet ist.

## Revendications

1. Silencieux (1) pour un système d'échappement comprenant une sortie de fluide (13) et un moyen de commande (2, 22) pour ouvrir et fermer la sortie de fluide (13), le moyen de commande (2, 22) comprenant un moyen de commande dépendant de la température (2) prévu pour ouvrir et fermer la sortie de fluide (13) en fonction de la température du silencieux (1).

2. Silencieux selon la revendication 1, agencé de telle sorte que lorsque le système d'échappement est utilisé, la sortie de fluide soit ouverte par le moyen de commande et que lorsque le système d'échappement n'est pas utilisé, la sortie de fluide soit fermée par le moyen de commande.

3. Silencieux selon la revendication 1, agencé de telle sorte que lorsque le système d'échappement est utilisé, la sortie de fluide soit fermée par le moyen de commande et que lorsque le système d'échappement n'est pas utilisé, la sortie de fluide soit ouverte par le moyen de commande.

4. Silencieux selon l'une quelconque des revendications précédentes, dans lequel la sortie de fluide est une ouverture formée dans le carter du silencieux.

5. Silencieux selon l'une quelconque des revendications précédentes, dans lequel la sortie de fluide est un bouchon autotaraudeur.

6. Silencieux selon l'une quelconque des revendications précédentes, dans lequel le moyen de commande dépendant de la température comprend un bilame.

7. Silencieux selon la revendication 4, dans lequel le moyen de commande comprend un bouchon pour fermer l'ouverture.

8. Silencieux selon l'une quelconque des revendications précédentes, dans lequel le moyen de commande est prévu à proximité d'une surface interne du silencieux.

9. Silencieux selon l'une quelconque des revendications 1 à 7, dans lequel le moyen de commande est prévu à proximité d'une surface externe du silencieux.

10. Silencieux selon l'une quelconque des revendications précédentes lorsqu'elle dépend de la revendication 6, dans lequel le bilame est maintenu à une extrémité de telle sorte qu'une extrémité libre du bilame puisse être déplacée en faisant varier la température du bilame.

11. Silencieux selon la revendication 10, dans lequel le bilame est substantiellement droit.

12. Silencieux selon la revendication 10, dans lequel le bilame est courbe.

13. Silencieux selon l'une quelconque des revendications précédentes, comprenant en outre un deuxième bilame.

14. Silencieux selon la revendication 13, dans lequel le deuxième bilame est fixé au premier bilame en au moins un point.

15. Silencieux selon la revendication 13 ou 14, dans lequel le deuxième bilame est tendu contre le premier bilame à au moins une température.

16. Silencieux selon la revendication 6, dans lequel le bilame est maintenu en au moins deux emplacements de telle sorte que le bilame puisse se courber.

17. Silencieux selon la revendication 16, dans lequel le moyen de commande est agencé de telle sorte que lorsque le bilame est à une première température, le bilame soit substantiellement plat et cause la fermeture de la sortie de fluide, et que lorsque le bilame est à une deuxième température, le bilame soit courbé et cause l'ouverture de la sortie de fluide.

18. Silencieux selon la revendication 17, dans lequel la première température est supérieure à la deuxième température.

19. Silencieux selon la revendication 17, dans lequel la deuxième température est supérieure à la première température.

20. Silencieux selon l'une quelconque des revendications précédentes, comprenant un recouvrement pour protéger le moyen de commande.

21. Silencieux selon la revendication 20, dans lequel le recouvrement comprend un bilame de recouvrement.

22. Silencieux selon la revendication 21, agencé de telle sorte que le bilame de recouvrement adopte une configuration plus plate lorsque la sortie de fluide est fermée et une configuration plus courbée lorsque la sortie de fluide est ouverte.

23. Procédé pour adapter un silencieux d'un système d'échappement, comprenant les étapes consistant à :
fournir une sortie de fluide pour le silencieux ; et
fournir un moyen de commande du silencieux dépendant de la température, agencé pour ouvrir et fermer la sortie de fluide en fonction de la température du silencieux.

24. Procédé selon la revendication 23, comprenant en outre l'étape consistant à agencer le moyen de commande de telle sorte que lorsque le système d'échappement est utilisé, la sortie de fluide soit ouverte par le moyen de commande et que lorsque le système d'échappement n'est pas utilisé, la sortie de fluide soit fermée par le moyen de commande.

25. Procédé selon la revendication 23, comprenant en outre l'étape consistant à agencer le moyen de commande de telle sorte que lorsque le système d'échappement est utilisé, la sortie de fluide soit fermée par le moyen de commande et que lorsque le système d'échappement n'est pas utilisé, la sortie de fluide soit ouverte par le moyen de commande.

26. Procédé selon l'une quelconque des revendications 23 à 25, dans lequel l'étape consistant à fournir une sortie de fluide pour le silencieux comprend l'étape consistant à former une ouverture dans le carter du silencieux.

27. Procédé selon l'une quelconque des revendications 23 à 25, dans lequel l'étape consistant à fournir une sortie de fluide pour le silencieux comprend l'étape consistant à insérer un bouchon autotaraudeur.

28. Procédé selon l'une quelconque des revendications 23 à 27, dans lequel le moyen de commande dépendant de la température comprend un bilame.

29. Procédé selon la revendication 26, dans lequel le moyen de commande comprend un bouchon pour fermer l'ouverture.

30. Procédé selon l'une quelconque des revendications 23 à 29, comprenant l'étape consistant à prévoir le moyen de commande à proximité d'une surface interne du silencieux.

31. Procédé selon l'une quelconque des revendications 23 à 29, comportant l'étape consistant à prévoir le moyen de commande à proximité d'une surface externe du silencieux.

32. Procédé selon l'une quelconque des revendications précédentes lorsqu'elle dépend de la revendication 28, dans lequel le bilame est maintenu à une extrémité de telle sorte qu'une extrémité libre du bilame puisse être dêtre déplacée en faisant varier la température du bilame.

33. Procédé selon la revendication 32, dans lequel l'étape consistant à fournir un bilame est l'étape consistant à fournir un bilame substantiellement droit.

34. Procédé selon la revendication 32, dans lequel l'étape consistant à fournir un bilame est l'étape consistant à fournir un bilame courbe.

35. Procédé selon l'une quelconque des revendications 23 à 34, comprenant en outre l'étape consistant à fournir un deuxième bilame.

36. Procédé selon la revendication 35, comprenant l'étape consistant à fixer le deuxième bilame au premier bilame en au moins un point.

37. Procédé selon la revendication 35 ou 36, comprenant l'étape consistant à tendre le deuxième bilame contre le premier.

38. Procédé selon la revendication 28, dans lequel le bilame est maintenu en au moins deux emplacements de telle sorte que le bilame puisse se courber.

39. Procédé selon la revendication 38, comprenant l'étape consistant à agencer le moyen de commande de telle sorte que lorsque le bilame est à une première température, le bilame soit substantiellement plat et cause la fermeture de la sortie de fluide, et que lorsque le bilame est à une deuxième température, le bilame soit courbé et cause l'ouverture de la sortie de fluide.

40. Procédé selon la revendication 39, dans lequel la première température est supérieure à la deuxième température.

41. Procédé selon la revendication 39, dans lequel la deuxième température est supérieure à la première température.

42. Procédé selon l'une quelconque des revendications 23 à 41, comprenant l'étape consistant à fournir un recouvrement pour protéger le moyen de commande.

43. Procédé selon la revendication 42, dans lequel l'étape consistant à fournir un recouvrement comprend l'étape consistant à fournir un bilame de recouvrement.

44. Procédé selon la revendication 43, comprenant l'étape consistant à agencer le silencieux de telle sorte que le bilame de recouvrement adopte une configuration plus plate lorsque la sortie de fluide est fermée et une configuration plus courbée lorsque la sortie de fluide est ouverte.
